# EUROPEAN PATENT SPECIFICATION

(11) **EP 1 641 552 B1**
(45) Date of publication and mention of the grant of the patent: **19.10.2011**
(21) Application number: 04740289.6
(22) Date of filing: 25.06.2004
(51) Int. Cl.: B01D 53/26, B65D 81/26, B01D 53/04, F24F 3/14

(54) **HUMIDITY ABSORBING DEVICE**
FEUCHTIGKEITSABSORPTIONSVORRICHTUNG
DISPOSITIF ABSORBANT L'HUMIDITE

(30) Priority: 07.07.2003 FR 0308296
(43) Date of publication of application: 05.04.2006
(73) Proprietor: Henkel AG & Co. KGaA, 40589 Düsseldorf (DE)
(72) Inventor: DE MAN, Eelco, Han, NL-5251 XD Vlijmen (NL); SIM, Martin, William, 40545 Düsseldorf (DE); BERGER, Jacques, F-27920 Saint-Pierre de Bailleul (FR); ORLIK, Sylvain, F-27400 Surtauville (FR)
(86) International application number: PCT/EP2004/006877
(87) International publication number: WO 2005/005024

(56) References cited:
- US-A- 5 148 613
- PATENT ABSTRACTS OF JAPAN vol. 1996, no. 12, 26 December 1996 (1996-12-26) -& JP 08 206440 A (HAKUGEN:KK), 13 August 1996 (1996-08-13)
- PATENT ABSTRACTS OF JAPAN vol. 1996, no. 04, 30 April 1996 (1996-04-30) -& JP 07 328371 A (HAKUGEN:KK), 19 December 1995 (1995-12-19) -& DATABASE WPI Section Ch, Derwent Publications Ltd., London, GB; Class J01, AN 1996-072935 XP002309166 -& JP 07 328371 A (HAKUGEN CO LTD) 19 December 1995 (1995-12-19)
- PATENT ABSTRACTS OF JAPAN vol. 1997, no. 07, 31 July 1997 (1997-07-31) -& JP 09 057045 A (HAKUGEN:KK), 4 March 1997 (1997-03-04)
- PATENT ABSTRACTS OF JAPAN vol. 2000, no. 24, 11 May 2001 (2001-05-11) -& JP 2001 206429 A (FUMAKILLA LTD), 31 July 2001 (2001-07-31)
- PATENT ABSTRACTS OF JAPAN vol. 2002, no. 12, 12 December 2002 (2002-12-12) -& JP 2002 224527 A (KOKUBO KOGYOSHO:KK), 13 August 2002 (2002-08-13)

## Description

The invention relates to a humidity absorbing device. This kind of device is mainly used inside housing, in poorly insulated rooms or in rooms where the level of humidity in the air is naturally high, such as the bathroom or laundry.

The printed patent specification of European patent EP 0 739 060 describes a known humidity absorbing device comprising a liquid catchment cup, a supporting element mounted on the said cup, and a cassette enclosing crystals of hygroscopic product. The supporting element has on its front and rear faces a grille, and the side walls of the cassette are permeable to water in the liquid or vapor phase.

This device functions as follows: First, the cassette filled with crystals is slid into the supporting element. The crystals of hygroscopic product are then situated between the grilles on the front and rear faces of the said element. The humid air of the room penetrates the interior of the device by passing through the said grilles, then through the side walls of the cassette to come into contact with the said crystals. The crystals absorb the water vapor contained in the air and, once saturated with water, begin to melt. The liquid that forms flows out through the side walls of the cassette and falls into the liquid catchment cup. After several weeks of utilization, the user has to empty the liquid catchment cup and replace the cassette that has been emptied of its crystals with a new one. This device can therefore be drained and refilled.

The crystals of hygroscopic product are generally crystals of calcium chloride (CaCl₂), magnesium chloride (MgCl₂), or a mixture of these products. Since these crystals have a very great affinity with water, they soak up water vapor until they are saturated and then become liquid. The humidity of the air is thus transformed into a liquid, which is called brine.

The brine, however, presents the disadvantage of altering the surface of certain materials when it comes into contact with them. For example, it can attack metallic parts and discolor pieces of fabric or carpet. Moreover, the brine has an irritant effect on the skin and eyes.

Generally, the liquid catchment cup of the device contains a more or less large quantity of brine. Now a careless person or a pet might upset the device. When such an accident happens, the brine will spill out of the liquid catchment cup through the grilles of the supporting element. The user then has to mop up the spilt brine and quickly rinse the soiled surfaces, preferably with lukewarm water to which ammonia has been added, to prevent them being damaged by the brine. Moreover, while accomplishing this task the user has to avoid, if possible, any contact between the brine and his/her skin.

Other devices comprising openings with moisture permeable and water impermeable membrans are described in JP08206440A, JP07328371A and JP09057045A.

The object of the invention is to provide an improved humidty absorbing device compared to the devices described in the state of the art.

The present object is achieved by the features of claim 1.

Further advantageous embodiments of the invention are specified in the dependent claims

This object is achieved by means of a humidity absorbing device comprising a container inside which is arranged a support for a hygroscopic product, the said container being formed of at least two parts capable of being assembled to one another and capable of being separated from one another, these two parts comprising a liquid catchment cup and an upper part. In addition, according to the invention, the said parts are capable of being tightly assembled to one another, and the said container has two inlet windows on two opposing side faces covered by a membrane that is permeable to water vapor and impermeable to water in the liquid phase.

The inlet windows covered by the membrane allows the water vapor present in the air to enter the interior of the container and thus to be absorbed by the hygroscopic product. However, since the membrane is impermeable to liquid water, the brine cannot exit the container by this same window.

The at least two inlet windows on two opposing side improve the circulation of air inside the device.

Moreover, since the different parts of the container are tightly assembled to one another, the brine cannot find any other exit route. The brine is therefore enclosed inside the container and cannot escape, no matter what the position of the latter: lying on its side, upright, upside down, etc.

It will also be noted that the parts of the container are assembled to one another in such a way as to be able to be separated from one another. This makes it possible to access the support situated inside the container to place a refill of the hygroscopic product in it after the preceding one has entirely melted. Consequently, the device according to the invention is refillable.

In addition, the fact that the device according to the invention can be disassembled can prove useful if one wishes to entirely clean it or stow it away.

In one embodiment of the invention the device has at least one opening for drainage of the container, and comprises a stopper suitable for plugging this opening.

The said opening makes it possible to empty out the brine collected in the container without having to separate the parts of the latter, whereas in the absence of such an opening, the container has to be drained by separating the parts of the container.

The stopper, capable of hermetically sealing this opening, prevents the brine from escaping if the device topples.

In another embodiment of the invention, the said at least two parts of the container are capable of being assembled in a separable manner by means of their facing edges, the edge of one of the parts having a skirt that is capable of cooperating with the edge of the other part by elastic deformation.

This method of assembly exploits the elasticity of the materials from which the edges of the said parts are made. Thus the skirt is preferably made from a material that is more elastic than the edge of the said other part.

Advantageously, the said at least two parts of the container are capable of being assembled in a separable manner by means of their facing edges which have complementary shapes. For example, the abovementioned skirt and the edge of the said other part have complementary shapes.

It is also possible to select a method of assembly involving the complementarity of the facing edges and having, in addition, a seal that is pinched between the said edges.

In general, any method of assembly can be chosen, provided the parts are assembled tightly and can be separated.

According to one embodiment of the invention, the device comprises at least one fixing element joined to one of the parts and a second fixing element joined to the other part, the said elements being capable of engaging with one another when the parts are assembled, in order to secure the assembly.

In this way the different parts of the device are prevented from coming apart when the device topples, or falls, in the event that the latter has been installed at a height.

Advantageously, the drainage opening is arranged in one of the parts, while the stopper is connected to the other part, so that closure of the said opening by the stopper secures the assembly of the two parts.

The drainage opening and the stopper thus play the role of fixing elements capable of securing the parts of the container assembled to one another.

According to one embodiment of the invention, the said container has at least one inlet window arranged in the upper part, the support for the hygroscopic product being joined to this upper part.

In this way, this support is situated above the liquid catchment cup, close to an inlet window, and the humid air passing through this window quickly comes into contact with hygroscopic product carried by the support.

According to one embodiment of the invention, the upper part of the container comprises two elements: an intermediate element and a lid on top of the said intermediate element, the intermediate element and the lid being capable of being tightly assembled to one another.

According to another embodiment of the invention, the upper part of the container is one single element: a lid capable of covering the top opening of the liquid catchment cup.

Finally, in order to improve the circulation of air inside the device, the container can have at least one inlet window arranged in the said lid, the lid being either one of the elements of the upper part, or the upper part itself being the lid; the container can, for example, have two inlet windows, on two opposing side faces, and possibly an additional inlet window on the upper face of the lid.

The invention and its benefits will be better understood after perusal of the detailed description of different embodiments of the invention, as illustrated by the following figures:
- Figure 1 is a front view of a first embodiment of the humidity absorbing device according to the invention;
- Figure 2 is a side view of the device shown in Figure 1;
- Figure 3 is an exploded view of a section through the device shown in Figure 1, the parts of the device having been separated from one another;
- Figure 4 is a detailed view of the method of assembling the facing edges of the two parts of the device shown in Figure 1;
- Figure 5 is an exploded perspective view of a second embodiment of the invention; and
- Figure 6 is a schematic representation of a third embodiment of the invention.

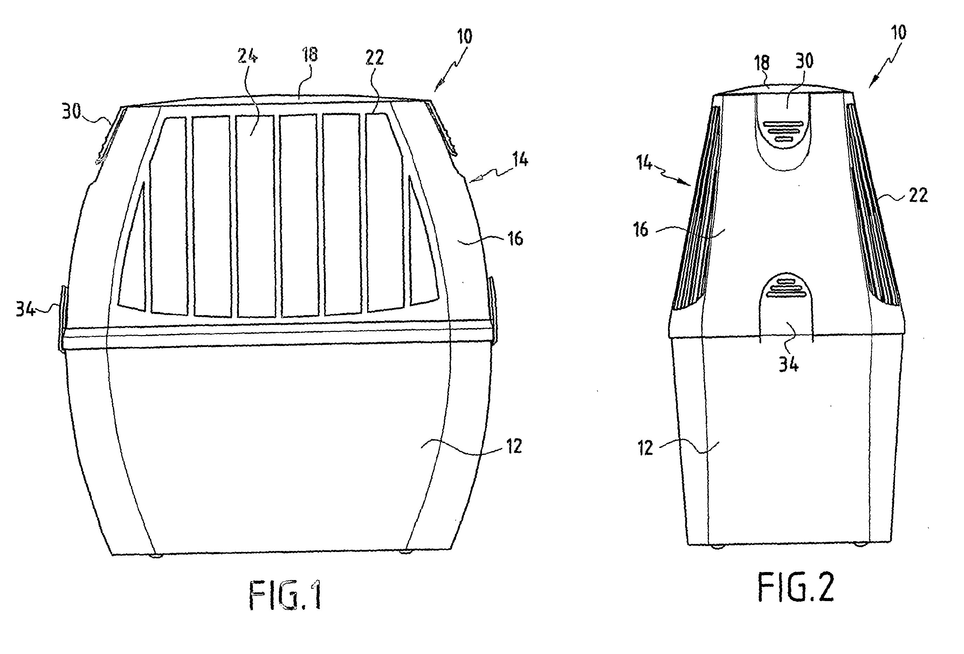

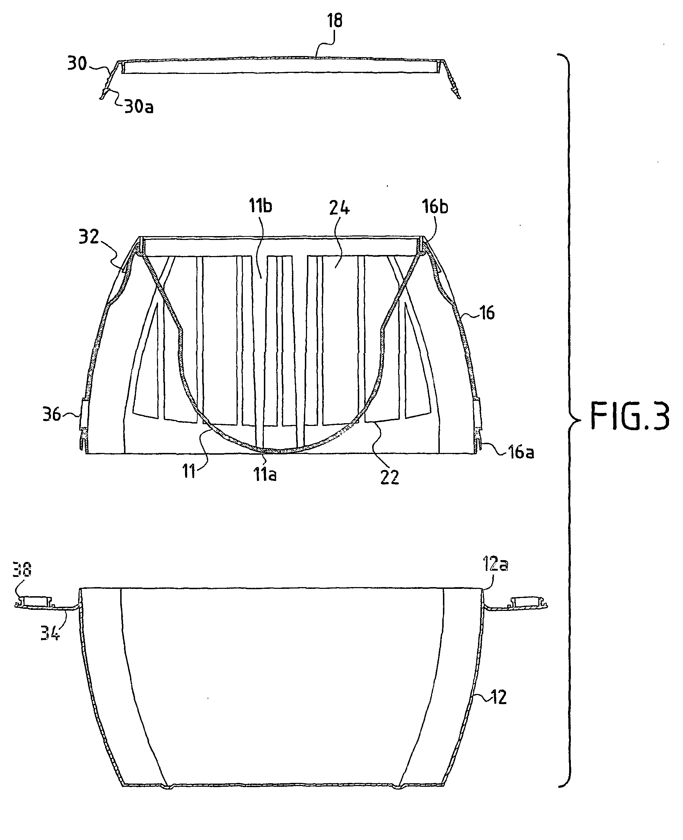

Figures 1 to 3 show a humidity absorbing device comprising a container 10, inside which is situated a support for a hygroscopic product, consisting in this case of a basket 11, capable of receiving a hygroscopic product in the form of a block, and more particularly in the form of a tablet (not shown). The container 10 is formed of two parts that can be separated from one another: a catchment cup 12 and an upper part 14.

The catchment cup 12 comprises a bottom wall, a side wall, and its upper face is open.

The upper part 14 comprises two elements: an intermediate element 16 and a lid 18.

The intermediate element 16 is formed by a side wall and is joined to the basket 11. The intermediate element 16 and the basket 11 form only one single and the same piece.

The intermediate element 16 has open upper and lower faces, the upper face being capable of being closed by the lid 18.

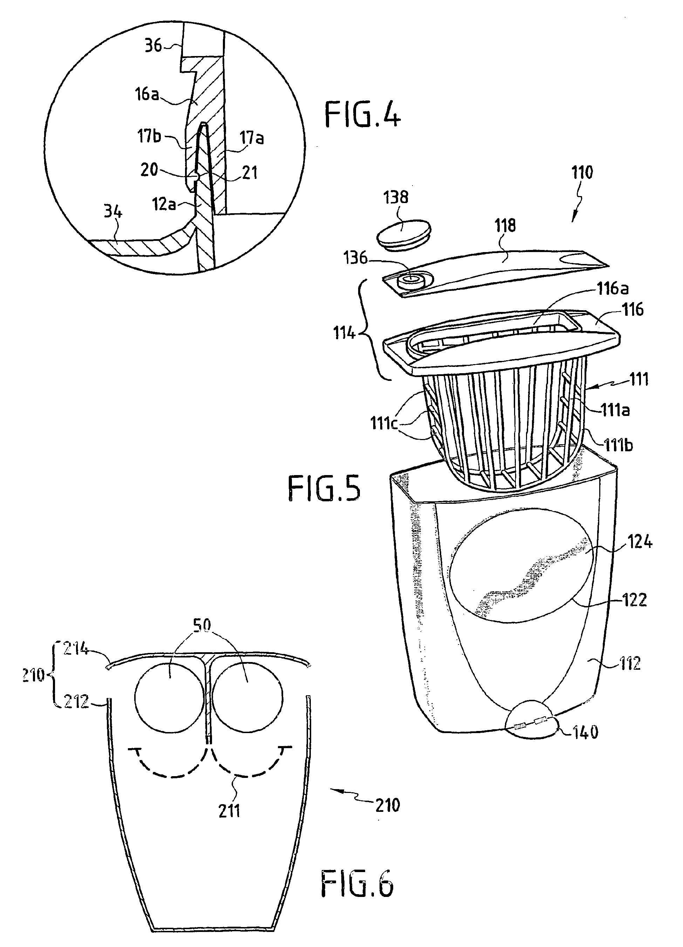

The lower edge 16a of the intermediate element 16 cooperates with the upper edge 12a of the catchment cup 12. This cooperation is shown in detail in Figure 4. The extremity of the lower edge 16a separates into two strips of material 17a and 17b. At least one of the strips forms a skirt which deforms elastically when the upper edge 12a of the cup is engaged between them. In this case, the outer strip 17b forms a skirt which, as it deforms, flattens against the upper edge 12a, which guarantees the tightness of the assembly thus made.

One of the strips 17a and 17b has on its side facing the other strip a rib 20 capable of penetrating a groove 21 of a complementary shape, worked into the upper edge 12a of the cup, when the two parts are assembled. The rib 20 and the groove 21 have a dual function: to keep the parts 12 and 14 assembled, by snapfit cooperation, and to reinforce the tightness of the assembly. They do not, however, prevent the user from separating the parts 12 and 14 if he/she so desires.

The method of assembly between the upper edge 16b of the intermediate element 16 and the lid 18 is similar to that described above, the upper edge 16b having an elastically deformable skirt.

This method of assembly exploits the elasticity of the edges of the intermediate element 16 and the rigidity of the edges of the cup 12 and the lid 18 which cooperate respectively with the lower edge 16a and the upper edge 16b of the intermediate element 16. Accordingly, the intermediate element 16 is preferably made from polyethylene (PE), especially from low-density polyethylene (PELD) or high-density polyethylene (PEHD), or from polypropylene (homopolymer or copolymer), or from a PE/PP mixture, or from one of these materials with the addition of an elastomer, whereas the lid 18 and the cup 12 are made from polypropylene (PP).

As shown in Figures 1 to 3, the intermediate part 16 has on its front and rear faces an inlet window 22. Each inlet window 22 is in the form of a grille and is covered by a membrane 24 permeable to water vapor and impermeable to water in the liquid phase. This membrane is made from Tyvek®, from GoreTex®, or from any other material having the desired permeability properties. The membrane 24 covers the inlet window 22 in such a way as to prevent the liquid water from exiting the container 10 through this window 22.

The tight fixing of the membrane 24 on the inlet window 22 can be achieved in various ways. For example, it is possible to use a process known as "in mold labeling," which consists of placing the membrane 24 in the bottom of the mold before injecting the material used to mold the intermediate part 16. It is also possible first to mold the intermediate part 16 in plastic and then to fix the membrane by welding on plastic. In all cases, it is necessary to ensure that the materials of the intermediate part 16 and the membrane 24 are suitable for being joined by the chosen process.

The permeability to water vapor of the membrane 24 varies depending on the material from which it is made. For the least permeable membranes, exchanges between the outside atmosphere and the hygroscopic product enclosed in the container 10 are promoted by appropriately selecting the size and number of inlet windows 22. For example, an additional inlet window can be arranged in the lid 18.

The basket 11 intended to receive the said hygroscopic product is joined to the upper part 14 and is situated at the level of the windows 22 so that the ambient air, with the water vapor it contains, having passed through the membrane 14, comes directly into contact with the hygroscopic product.

The basket 11 is molded in one piece with the intermediate element 16 of the upper part 14. It is, by the way, a simple cage, formed by a supporting strip 11 a and uprights 11 b. The cage is therefore not covered by any solid wall.

The supporting strip 11 a is joined at its ends to the upper edge 16b of the intermediate element 16. In addition, the bottom of this strip is supported by the uprights 11b which are also joined at their ends to the upper edge 16b of the intermediate element 16. The bottom of the strip 11a is formed as an arc of a circle, with a diameter greater than that of the tablet of hygroscopic product that it is capable of supporting, and the width of the strip 11 a is greater than the thickness of the said tablet. In the present case, the strip 11a is solid, but it could have a multiplicity of perforations, or be formed by two bows joined at regular intervals by crosspieces, as shown in Figure 5, described later on.

Another characteristic of the device shown in Figures 1 to 3 is that it comprises fixing elements 30, 32, 34, 36 intended to secure the assembly of the different parts of the container 10. These elements are on the one hand tongues 30, 34, joined to the lid 18 and the cup 12, and on the other hand teeth 32 and openings 36 present on the side faces of the intermediate part 16.

The tongues 30 of the lid 18 have at their ends hooks 30a. When the tongues 30 are folded down along the side faces of the intermediate element 16, the hooks 30a engage with the teeth 32 so that the lid and the intermediate part are kept assembled.

The tongues 34 joined to the cup 12 have at their ends stoppers 38. When the tongues 34 are folded up along the side faces of the intermediate part 16, the stoppers 38 snap into the openings 36, making it possible to secure the assembly of the intermediate element and the cup 12.

The openings 36 also serve for the drainage of the device, which avoids having to disassemble the container 10 in order to empty it. When the device is in use, these openings 36 are closed by the stoppers 38.

Figures 5 and 6 show other embodiments of the device according to the invention.

The device shown in Figure 5 is, in terms of its structure, fairly similar to that of Figures 1 to 3. It again has a liquid catchment cup 112, an upper part 114, and a support in the form of a basket 111 for the hygroscopic product. The upper part 114 is also composed of an intermediate element 116 with a lid 118 on top. In this case, the intermediate element 116 forms a plate that can be placed across the opening of the cup 112 and its central opening 116a can be blocked by the lid 118 to close the container.

The basket 111 is carried by the intermediate element 16, for example by its rim which rests on one part of the intermediate element. The basket 111 is a simple cage having a wire-like structure and is not formed in one piece with the said intermediate element 16. On its front and rear faces the basket 111 has approximately vertical rods 111a which connect with a bow 111b having a general U-shape. The bottom and the sides of the basket are formed by crosspieces 111 c extending horizontally between the bows 111 b of the front and rear faces.

The thickness of the plate formed by the intermediate element 116 is very much smaller than the height of the basket 111, and the basket is therefore situated almost entirely under the intermediate element. Once the parts of the device have been assembled to one another, the basket 111 is positioned in the region of the upper section of the cup 112. Inlet windows 122 covered by a membrane 124 are arranged in the upper section of the cup 112, on its front and rear faces, opposite the said basket 111.

The method of assembling the different parts of the container 110 is not shown in detail. This may consist, as in the device shown in Figures 1 to 3, of a system with elastically deformable skirt, or a system in which the facing edges of two parts engage by virtue of their complementary shapes, the tightness of the container being achieved by the tight fit of the said edges or by means of an additional seal pinched between the said edges.

It will also be noted that the device does not have a fixing element, and that a drainage opening 136 is arranged in the lid 118. This opening 136 can be closed by a stopper that can be screwed onto the rim of the opening 136.

The device shown in Figure 5 also comprises a stabilizing base140 supporting the liquid catchment cup. This base is in the form of two ears fixed on either side of the liquid catchment cup 112 , at its bottom wall, by a hinged link. These ears, when folded in are tucked away inside cavities arranged in the wall of the cup 112 or in its bottom and, when they are folded out they contact the floor in such a manner as to reinforce the stability of the device.

The device shown in Figure 6 has a different structure from the preceding ones. The container 210 still comprises a liquid catchment cup 212 and an upper part 214, but here the upper part 214 is one single element. The upper part 214 is a lid capable of covering the open upper face of the liquid catchment cup 212. The method of assembling these two parts can be different from those described above, as long as it guarantees a tight and separable assembly.

The basket 211 is suspended from the upper part 214 and is formed in one piece with it. The basket 211 is capable of receiving two tablets of the hygroscopic product 50.

The inlet windows can be arranged on the upper part 214 forming the lid or on the front and rear faces of the cup.

Since the device has no drainage opening it is necessary to separate the upper part 214 from the liquid catchment cup 212 in order to empty the latter.

In general terms, it is useful to provide on any humidity absorbing device a system for visualization of the level of liquid collected inside the cup 12, 112, 212. This system can comprise a sight window made from transparent material located on the side wall of the cup 12, 112, 212, accompanied by a graduated scale indicating to the user the consumption of the refill of hygroscopic product as a function of the quantity of liquid collected.

It is also possible to make the liquid catchment cup 12, 112, 212 from transparent material, for example from transparent plastic, in order to make the collected liquid visible.

In addition, at least one portion of the upper part 14, 114, 214 can be made from transparent plastic, which allows the user to see the refill of hygroscopic product 50 and to directly ascertain its state of consumption.

## Claims

1. A humidity absorbing device comprising a container (10, 110, 210) inside which is arranged a support (11, 111, 211) for a hydroscopic product (50), the said container being formed by at least two parts capable of being assembled to one another and capable of being separated from one another, these two parts comprising a liquid catchment cup (12, 112, 212) and an upper part (14, 114, 214), wherein said parts are capable of being assembled to one another in a tight manner, **characterized in that** the said container (10, 110, 210) has two inlet windows (22,122) on two opposing side faces covered by a membrane (24, 124) permeable to water vapor and impermeable to water in the liquid phase, in order to improve the circulation of air inside the device.

2. A device according to claim 1, **characterized in that** it has at least one drainage opening (36, 136) of the container (10, 110) and that it comprises a stopper (38, 138) capable of plugging the said opening (36, 136).

3. A device according to claim 1 or 2, **characterized in that** the two parts (12, 112, 212; 14, 114, 214) are capable of being assembled in a separable manner by means of their facing edges, the edge (16a) of one of the parts having a skirt (17b) capable of cooperating with the edge (12a) of the other part by elastic deformation.

4. A device according to any of the claims 1 to 3, **characterized in that** the two parts (12, 112, 212; 14, 114, 214) are capable of being assembled in a separable manner by their facing edges which have complementary shapes.

5. device according to any of claims 1 to 4 , **characterized in that** it comprises at least one first fixing element (30, 34) joined to one of the parts and a second fixing element (32, 36) joined to the other part, the said elements being capable of engaging with one another when the parts are assembled, in order to secure the assembly.

6. A device according to claims 2 and 5, **characterized in that** the drainage opening (36) is arranged in one of the parts (14), while the stopper (38) is connected to the other part (12), so that closure of said opening (36) by the stopper (38) secures the assembly of the two parts (12, 14).

7. A device according to any of claims 1 to 6, **characterized in that** said container (10) has at least one inlet window (22) arranged in the upper part (14), said support for hydroscopic product (11) being joined to this upper part (14).

8. A device according to any of claims 1 to 7, **characterized in that** said upper part (14, 114) comprises an intermediate element (16, 116), and a lid (18, 1 18) on top of said element (16, 1 16), the intermediate element (16. 116) and the lid (18, 118) being capable of being assembled to one another in a tight manner.

9. A device according to any of claims 1 to 6, **characterized in that** said upper part (214) is a lid capable of covering the upper opening of the liquid catchment cup (212).

10. A device according to any of claims 1 to 9, **characterized in that** said support for hydroscopic product (11, 211) is formed in one piece with at least a portion of the upper part (14, 214).

11. A device according to any of claims 1 to 10, **characterized in that** said support for hydroscopic product (11, 111, 211) is a simple cage capable of receiving a hydroscopic product in the form of a block (50).

12. A device according to any of claims 1 to 11, **characterized in that** it comprises in addition a stabilizing base (140) supporting the liquid catchment cup (1 1 2).

13. A device according to any of claims 1 to 12, **characterized in that** said container has at least one inlet window arranged in said lid.

## Patentansprüche

1. Feuchtigkeitsabsorptionsvorrichtung, aufweisend einen Behälter (10, 110, 210), in dem ein Träger (11, 111, 211) für ein hygroskopisches Produkt (50) angeordnet ist, wobei der Behälter aus mindestens zwei Teilen gebildet ist, die zusammengebaut und voneinander getrennt werden können, wobei diese beiden Teile ein Flüssigkeitsreservoir (12, 112, 212) und ein Oberteil (14, 114, 214) aufweisen, wobei die Teile dicht zusammengesetzt werden können, **dadurch gekennzeichnet, dass** der Behälter (10, 110, 210) zwei Einlassfenster (22, 122) an zwei gegenüberliegenden Seitenflächen aufweist, die von einer Membran (24, 124) bedeckt sind, die gegenüber Wasserdampf durchlässig und gegenüber Wasser in der flüssigen Phase undurchlässig ist, um die Luftzirkulation innerhalb der Vorrichtung zu verbessern.

2. Vorrichtung nach Anspruch 1, **dadurch gekennzeichnet, dass** sie mindestens eine Ablauföffnung (36, 136) des Behälters (10, 110) besitzt und dass sie einen Stöpsel (38, 138) aufweist, der die Öffnung (36, 136) zustöpseln kann.

3. Vorrichtung nach Anspruch 1 oder 2, **dadurch gekennzeichnet, dass** die beiden Teile (12, 112, 212; 14, 114, 214) mittels ihrer zueinander weisenden Kanten lösbar zusammengesetzt werden können, wobei die Kante (16a) eines der Teile einen Kragen (17b) aufweist, der mit der Kante (12a) des anderen Teils durch elastische Verformung zusammenwirken kann.

4. Vorrichtung nach einem der Ansprüche 1 bis 3, **dadurch gekennzeichnet, dass** die beiden Teile (12, 112, 212; 14, 114, 214) mittels ihrer komplementäre Formen aufweisenden, zueinander weisenden Kanten lösbar zusammengesetzt werden können.

5. Vorrichtung nach einem der Ansprüche 1 bis 4, **dadurch gekennzeichnet, dass** sie mindestens ein erstes mit einem der Teile verbundenes Befestigungselement (30, 34) und ein zweites mit dem anderen Teil verbundenes Befestigungselement (32, 36) aufweist, wobei die Elemente ineinander greifen können, wenn die Teile zusammengesetzt sind, um den Aufbau zu sichern.

6. Vorrichtung nach den Ansprüchen 2 und 5, **dadurch gekennzeichnet, dass** die Ablauföffnung (36) in einem der Teile (14) angeordnet ist, während der Stöpsel (38) mit dem anderen Teil (12) derart verbunden ist, dass das Verschließen der Öffnung (36) durch den Stöpsel (38) den Aufbau der beiden Teile (12, 14) sichert.

7. Vorrichtung nach einem der Ansprüche 1 bis 6, **dadurch gekennzeichnet, dass** der Behälter (10) mindestens ein in dem oberen Teil (14) angeordnetes Einlassfenster (22) aufweist, wobei der Träger (11) für hygroskopisches Produkt (11) mit diesem oberen Teil (14) verbunden ist.

8. Vorrichtung nach einem der Ansprüche 1 bis 7, **dadurch gekennzeichnet, dass** das Oberteil (14, 114) ein Zwischenelement (16, 116) und einen Deckel (18, 118) auf dem Element (16, 116) aufweist, wobei das Zwischenelement (16, 116) und der Deckel (18, 118) dicht zusammengesetzt werden können.

9. Vorrichtung nach einem der Ansprüche 1 bis 6, **dadurch gekennzeichnet, dass** das Oberteil (214) ein Deckel ist, der die obere Öffnung des Flüssigkeitsreservoirs (212) bedecken kann.

10. Vorrichtung nach einem der Ansprüche 1 bis 9, **dadurch gekennzeichnet, dass** der Träger für hygroskopisches Produkt (11, 211) mit zumindest einem Abschnitt des Oberteils (14, 214) einstückig gebildet ist.

11. Vorrichtung nach einem der Ansprüche 1 bis 10, **dadurch gekennzeichnet, dass** der Träger für hygroskopisches Produkt (11, 111, 211) ein einfacher Käfig ist, der ein hygroskopisches Produkt in Form eines Blocks (50) aufnehmen kann.

12. Vorrichtung nach einem der Ansprüche 1 bis 11, **dadurch gekennzeichnet, dass** sie zusätzlich einen stabilisierenden Fuß (140) aufweist, der das Flüssigkeitsreservoir (112) stützt.

13. Vorrichtung nach einem der Ansprüche 1 bis 12, **dadurch gekennzeichnet, dass** der Behälter mindestens ein in dem Deckel angeordnetes Einlassfenster aufweist.

## Revendications

1. Dispositif absorbant l'humidité comprenant un récipient (10, 110, 210) à l'intérieur duquel est agencé un support (11, 111, 211) pour un produit hygroscopique (50), ledit récipient étant formé par au moins deux parties aptes à être assemblées l'une avec l'autre et aptes à être séparées l'une de l'autre, ces deux parties comprenant un bac de récupération de liquide (12, 112, 212) et une partie supérieure (14, 114, 214), dans lequel lesdites parties sont aptes à être assemblées l'une avec l'autre de façon serrée, **caractérisé en ce que** ledit récipient (10, 110, 210) a deux fenêtres d'entrée (22, 122) sur deux faces latérales opposées recouvertes par une membrane (24, 124) perméable à la vapeur d'eau et imperméable à l'eau en phase liquide, afin d'améliorer la circulation d'air à l'intérieur du dispositif.

2. Dispositif selon la revendication 1, **caractérisé en ce qu'**il a au moins une ouverture d'écoulement (36, 136) du récipient (10, 110) et qu'il comprend un bouchon (38, 138) apte à fermer ladite ouverture (36, 136).

3. Dispositif selon la revendication 1 ou 2, **caractérisé en ce que** les deux parties (12, 112, 212 ; 14, 114, 214) sont aptes à être assemblées d'une manière séparable au moyen de leurs bords se faisant face, le bord (16a) de l'une des parties ayant une jupe (17b) apte à coopérer avec le bord (12a) de l'autre partie par déformation élastique.

4. Dispositif selon l'une quelconque des revendications 1 à 3, **caractérisé en ce que** les deux parties (12, 112, 212 ; 14, 114, 214) sont aptes à être assemblées d'une manière séparable par leurs bords se faisant face qui ont des formes complémentaires.

5. Dispositif selon l'une quelconque des revendications 1 à 4, **caractérisé en ce qu'**il comprend au moins un premier élément de fixation (30, 34) joint à une des parties et un deuxième élément de fixation (32, 36) joint à l'autre partie, lesdits éléments étant aptes à s'engager l'un avec l'autre lorsque les parties sont assemblées, afin de sécuriser l'ensemble.

6. Dispositif selon les revendications 2 et 5, **caractérisé en ce que** l'ouverture d'écoulement (36) est agencée dans l'une des parties (14), tandis que le bouchon (38) est raccordé à l'autre partie (12), de telle sorte que la fermeture de ladite ouverture (36) par le bouchon (38) sécurise l'ensemble des deux parties (12, 14).

7. Dispositif selon l'une quelconque des revendications 1 à 6, **caractérisé en ce que** ledit récipient (10) a au moins une fenêtre d'entrée (22) agencée dans la partie supérieure (14), ledit support pour produit hygroscopique (11) étant joint à cette partie supérieure (14).

8. Dispositif selon l'une quelconque des revendications 1 à 7, **caractérisé en ce que** ladite partie supérieure (14, 114) comprend un élément intermédiaire (16, 116), et un couvercle (18, 118) par-dessus ledit élément (16, 116), l'élément intermédiaire (16, 116) et le couvercle (18, 118) étant aptes à être assemblés l'un avec l'autre d'une manière serrée.

9. Dispositif selon l'une quelconque des revendications 1 à 6, **caractérisé en ce que** ladite partie supérieure (214) est un couvercle apte à recouvrir l'ouverture supérieure du bac de récupération de liquide (212).

10. Dispositif selon l'une quelconque des revendications 1 à 9, **caractérisé en ce que** ledit support pour produit hygroscopique (11, 211) est formé en une seule pièce avec au moins une partie de la partie supérieure (14, 114).

11. Dispositif selon l'une quelconque des revendications 1 à 10, **caractérisé en ce que** ledit support pour produit hygroscopique (11, 111, 211) est une simple cage apte à recevoir un produit hygroscopique sous la forme d'un bloc (50).

12. Dispositif selon l'une quelconque des revendications 1 à 11, **caractérisé en ce qu'**il comprend en outre une base stabilisatrice (140) supportant le bac de récupération de liquide (112).

13. Dispositif selon l'une quelconque des revendications 1 à 12, **caractérisé en ce que** ledit récipient a au moins une fenêtre d'entrée agencée dans ledit couvercle.
